# EUROPEAN PATENT SPECIFICATION

(11) **EP 2 055 467 B1**
(45) Date of publication and mention of the grant of the patent: **16.05.2012**
(21) Application number: 08168384.9
(22) Date of filing: 05.11.2008
(51) Int. Cl.: B29D 30/18, B29D 30/32, B29D 30/48

(54) **Bead structure building apparatus in green tire buidling machine**
Wulststrukturerzeugungsvorrichtung in einer Erzeugungsmaschine für grüne Reifen
Appareil de fabrication d'une structure de talon dans une machine de fabrication de pneus verts

(30) Priority: 05.11.2007 KR 20070112176
(43) Date of publication of application: 06.05.2009
(73) Proprietor: Hankook Tire Co., Ltd., Gangnam-gu, Seoul 135-723 (KR)
(72) Inventor: Yoon, Seok Woo, 312-824, Geumsan-gun, Chungcheongnam-do (KR)
(74) Representative: Intès, Didier Gérard André

(56) References cited:
- EP-A- 0 854 030
- EP-A- 0 995 584
- EP-A- 1 314 545
- GB-A- 2 327 396

## Description

### Field of the Invention

The present invention relates to a bead structure building apparatus in a green tire building machine according to the preamble of claim 1. An apparatus of this kind is known from EP-A-0 995 584.

The bead structure building apparatus is capable of manufacturing a green tire having a uniform quality without a turn-up operation of a carcass.

### Description of the Related Art

As is generally known in the art, a building process is one of the important operations to manufacture a green tire having a good quality. In the building process, a variety of the partly manufactured products or articles from the separate processes are to be attached on a tire building drum in a sequential manner. Most of the state-of-the-art tires building processes make use of a flat drum for the tire building drum, which needs a turn-up operation after a bead structure is attached onto a carcass.

The typical manufacturing process of the green tire by using the flat drum, as known in the prior art, is briefly explained for the reference. Firstly, an inner liner and a carcass are placed on the flat drum in order, and then a finished bead structure (consisting of bead wire and bead filler) is attached on a predetermined location of the carcass. Lastly, the carcass is turned up around the bead structure by introducing compressed air into the space between the inner liner and the flat drum. Apparently, such process reveals that the partly manufactured products attached on the flat drum and then inflated thereafter have drawbacks in the aspect of uniformity. In other words, such a conventional building process is inherently disadvantageous in that it cannot ensure manufacture of a green tire having a uniform or homogeneous quality because there remains the possibility of deformation within the bead structure and an uneven pressing force is exerted on the portion with which the carcass turned up contacts.

EP0995584 discloses a known bead wire winding device. GB 2327396 discloses a support for use in tire manufacture, comprising a support surface against which a tire bead and apex can be wound.

### SUMMARY OF THE INVENTION

With the foregoing drawbacks in mind, it is therefore an object of the invention to provide a bead structure building apparatus in a green tire building machine that can uniformly maintain the pressing force of the bead structure against the carcass by way of building the bead structure with a Torus drum.

The Torus drum is well known in the art, and in the present invention it is designed to have the shape and dimension in accordance with the specification of a desired tire. Using the Torus drum in the inventive building process of the present invention brings about such advantages that there remains substantially no deformation within the bead structure during the building process as well as later in the vulcanizing process unlike the prior art using the flat drum.

In accordance with an aspect of the invention, the above and other objects can be accomplished by the provision of a bead structure building apparatus as defined in claim 1. Such a bead structure building apparatus comprises comprising: a bead wire supply means for introducing a bead wire toward a tire building drum; a pair of laterally spaced bead wire winding means disposed at opposite sides of a tire building drum for winding the bead wire thereon; a first moving means operatively engaged with the bead wire supply means for transporting the bead wire supply means to a respective position facing each bead wire winding means; a second moving means operatively connected with the respective bead wire winding means for transporting each bead wire winding means between a first and a second position, respectively; and a bead structure attaching means operatively connected at the circumferential end of the first and second bead wire winding means for attaching the bead structure onto the carcass disposed on the tire building drum.

Particular embodiments of the invention are the subject of the dependent claims.

### BRIEF DESCRIPTION OF THE DRAWINGS

The above and other objects, features and other advantages of the present invention will become apparent from a review of the following detailed description of the preferred embodiment taken in conjunction with the accompanying drawings, in which:
FIG. 1 is a schematic top plan view of a bead structure building apparatus in a green tire building machine in accordance with an embodiment of the invention;
FIG. 2 is a schematic side elevational view of FIG. 1 shown in arrow direction (a);
FIG. 3 is a schematic front view of FIG. 1 shown in arrow direction (b);
FIG. 4 is a partially enlarged view best showing the (c) portion of FIG. 3, with portions thereof removed for simplicity: and
FIG. 5 (A), (B) and (C) are partial sectional views schematically illustrating the various applications of the bead structure manufactured in accordance with the invention to the tire having a mono-ply or two-ply carcass, respectively.

### DETAILED DESCRIPTION OF THE PREFERRED EMBODIMENTS

Hereinafter, an exemplary embodiment of the present invention will be described in detail with reference to the accompanying drawings.

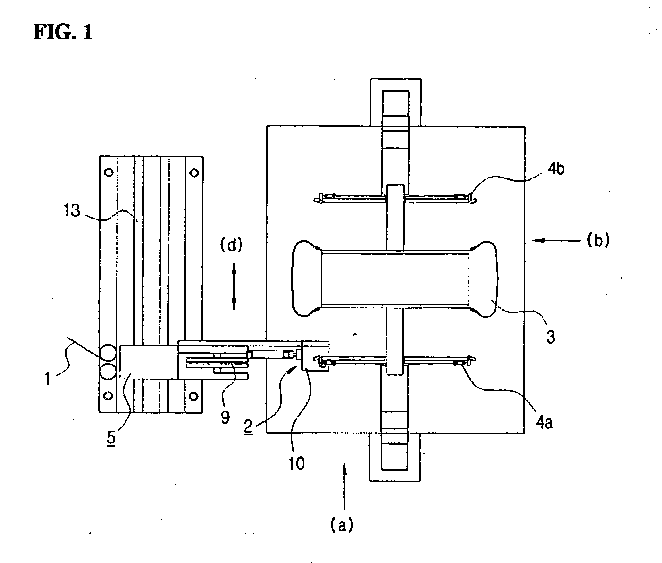

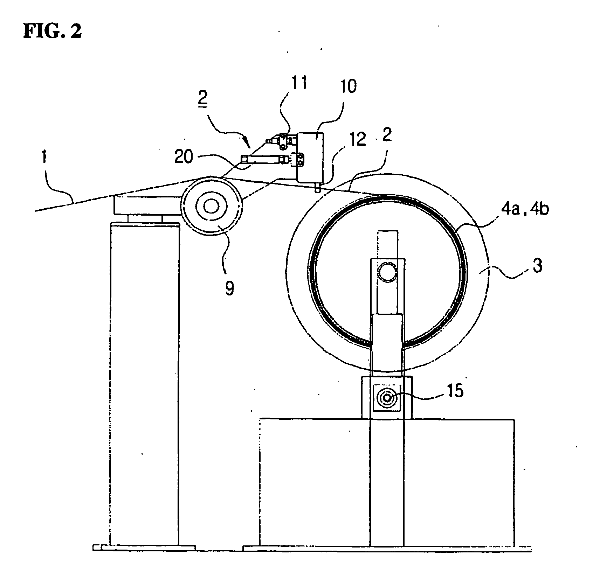

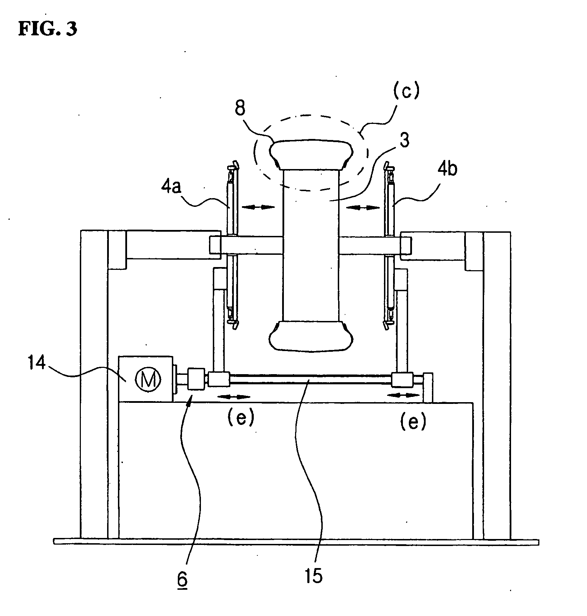

FIGS. 1 through 3 disclose a bead structure building apparatus in a green tire building machine according to the present invention, wherein FIG. 1 is a schematic top plan view of a bead structure building apparatus, FIG. 2 is a schematic side elevational view of FIG. 1 shown in arrow direction (a), and FIG. 3 is a schematic front view of FIG. 1 shown in arrow direction (b).

Referring now to FIGS. 1 through 3, it will be noted that a bead structure building apparatus in accordance with the invention comprises a bead wire supply means 2 for introducing a bead wire 1 toward a tire building drum 3; a pair of laterally spaced bead wire winding means 4a, 4b disposed at opposite sides of a tire building drum 3 for winding the bead wire 1 thereon; a first moving means 5 operatively engaged with the bead wire supply means 2 for transporting the bead wire supply means 2 to a respective position facing each bead wire winding means 4a. 4b; a second moving means 6 operatively connected with the respective bead wire winding means 4a, 4b for transporting each bead wire winding means 4a, 4b between a first and a second position, respectively; and a bead structure attaching means 6A operatively connected at the circumferential end of the first and second bead wire winding means 4a, 4b for attaching the completed bead structure 7 onto the carcass 8 disposed on the tire building drum 3.

Referring first to FIGS. 1 and 2, it can be appreciated that the bead wire supply means 2 includes a guide wheel 9 freely rotatable about its axis through which the bead wire 1 ism introduced to an applicator 10. The applicator 10 is provided with a gripper 11 operatively secured at one side of the applicator 10 for holding the bead wire 1. The gripper 11 can move back and forth together with the applicator 10 within a predetermined distance with respect to the respective bead wire winding means 4a, 4b by a hydraulic actuator, preferably an air cylinder 20. The applicator 10 further includes a cutter 12 for cutting the bead wire 1 when the bead wire winding operation is finished.

The first moving means 5 for transporting the bead wire supply means 2 comprises a guide rail 13 on which the bead wire supply means 2 is operatively secured and an actuator (not shown) for moving the bead wire supply means 2 on the guide rail 13. This assures that the bead wire supply means 2 is subjected to axially displaceably move on the guide rail 13 by activation of the actuator between two positions, that is, each position substantially corresponding to a position that faces each bead wire winding means 4a, 4b disposed at the initial position as shown in FIG.1 or FIG.3.

Preferably, in accordance with the present invention, the first and second bead wire winding means 4a, 4b are a pair of laterally spaced devices disposed at opposite sides of a tire building drum 3, and the first and second bead wire winding means 4a, 4b are totally of the same structures and dimensions. It should be understood that when the winding operation of the bead wire 1 is completed with respect to the first bead wire winding means 4a, the bead wire supply means 2 is then subject to slide on the guide rail 13 with the operation of the actuator in arrow direction (d) until it reaches the position facing the second bead wire winding means 4b. Likewise, when the winding operation of the bead wire 1 is completed with respect to the second bead wire winding means 4b, the bead wire supply means 2 slides backward on the guide rail 13 and returns to the initial position, that is, a position facing the first bead wire winding means 4a.

The second moving means 6 for transporting the first and second bead wire winding means 4a, 4b from/to the tire building drum 3 comprises a driving motor 14 for producing a rotary force and a linear guide 15 which is operatively connected with the motor 14 to produce a linear displacement from the revolving movement of the motor 14. The respective first and second bead wire winding means 4a, 4b is rigidly affixed at the linear guide 15 and is also capable of displaceable movement thereon. It is understood that the first and second bead wire winding means 4a, 4b is able to reciprocally move between a first and a second position in arrow direction (e) as shown in FIG. 3. Specifically, it will be noted that the first position (or initial position) corresponds to a position in which the respective first and second bead wire winding means 4a, 4b is positioned as shown in FIG. 3 wherein the bead wire winding operation is performed, while the second position corresponds to a position where respective first and second bead wire winding means 4a, 4b approach to a position in proximity to the tire building drum 3. At the second position, the bead structure 7 formed on the first and second bead wire winding means 4a, 4b will be attached onto the carcass, respectively as described hereinafter. It is therefore appreciated that the second position is predetermined depending upon the specification of the tire, wherein the movement of the first and second bead wire winding means 4a, 4b to the second position can be regulated by the operation of the motor 14.

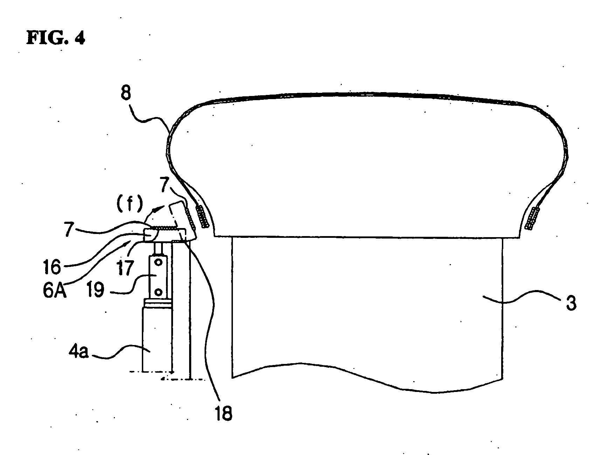

As clearly shown in FIG. 4, it can be seen that the bead structure attaching means 6A is operatively connected at an upper circumferential end of the first and second bead wire winding means 4a, 4b, respectively. The bead structure attaching means 6A includes a bead winding plate 16 on which the bead wire 1 is subject to be wound to finally form the bead structure 7. To this task, the bead winding plate 16 is provided with an insert groove 17 adapted to allow the bead wire 1 to be wound with a uniform spacing. The size of the insert groove 17 is dimensioned to be about a half of the diameter of the bead wire 1 to be inserted therein. The bead winding plate 16 is pivotally attached through a pivot axis, preferably a hinge pin 18 with an actuator, preferably an air cylinder 19. The air cylinder 19 is fixedly mounted to the upper end of the first and second bead wire winding means 4a, 4b such that the bead winding plate 16 can move pivotally about the hinge pin 18 when the air cylinder 19 is extended or retracted by the control signal. Therefore, in the event that the air cylinder 19 is extended by providing the compressed air thereto, the bead winding plate 16 will be pivoted clockwise about the hinge pin 18 in arrow direction (f) together with the bead structure 7. The bead winding plate 16 then continues to pivot until the bead structure 7 located thereon is attached to the lower portion of the carcass 8 on the tire building drum 3.

Operation of the inventive bead wire building apparatus employed in the green tire building machine will now be described with reference to FIGS. 1 through 4.
① As illustrated in FIG. 2, the bead wire 1 is guided through the guide wheel 9 of the bead wire supply means 2 and then is introduced to the applicator 10. At this time, the bead wire supply means 2 is firmly subject to be maintained at the initial position.
② When the bead wire 1 is secured by the gripper 11 of the applicator 10, the applicator 10 moves toward the bead winding plate 16 pivotally connected with the first bead wire winding means 4a upon the activation of the air cylinder 20.
③ As the bead wire 1 begins to be wound on the bead winding plate 16 and finally forms the bead structure 7, the bead wire 1 is cut by the cutter 12.
@ Next, as indicated in FIG. 1, once the applicator 10 is retracted to the initial position, then the bead wire supply means 2 together with the applicator 10 slidably moves along the guide rail 13 to the position facing the second bead wire winding means 4b.
⑤ With respect to the second bead wire winding means 4b, same processes as described above in ① through ③ are performed in sequential manner, and finally forms the bead structure 7 on the bead wire winding plate 16 pivotally connected with the second bead wire winding means 4b.
⑥ Then, the bead wire supply means 2 together with the applicator 10 slidably moves back along the guide rail 13 to the initial position, as depicted in FIG. 1.
⑦ As shown in FIG. 3, the first and second bead wire winding means 4a, 4b disposed at the first (initial) position start to approach simultaneously to the second position in proximity to the tire building drum 3 by the second moving means 6. Upon operation of the bead structure attaching means 6A, the bead winding plate 16 swings clockwise together with the bead structure 7 as indicated in phantom line in FIG. 4, whereby attaching the bead structure 7 onto the carcass 8 disposed on the tire building drum 3.
⑧ Once the bead structure 7 is attached onto the carcass 8, the bead winding plate 16 swings counterclockwise to its initial position, that is, a horizontal position as illustrated in FIG 4, and then the first and second bead wire winding means 4a, 4b are also simultaneously returned to respective initial position, as shown in FIG. 3.

Therefore, in accordance with the present invention, it is noted that a series of processes described above in ① through ⑧ continue to be performed repeatedly until the desired bead structure 7 is built on the carcass 8.

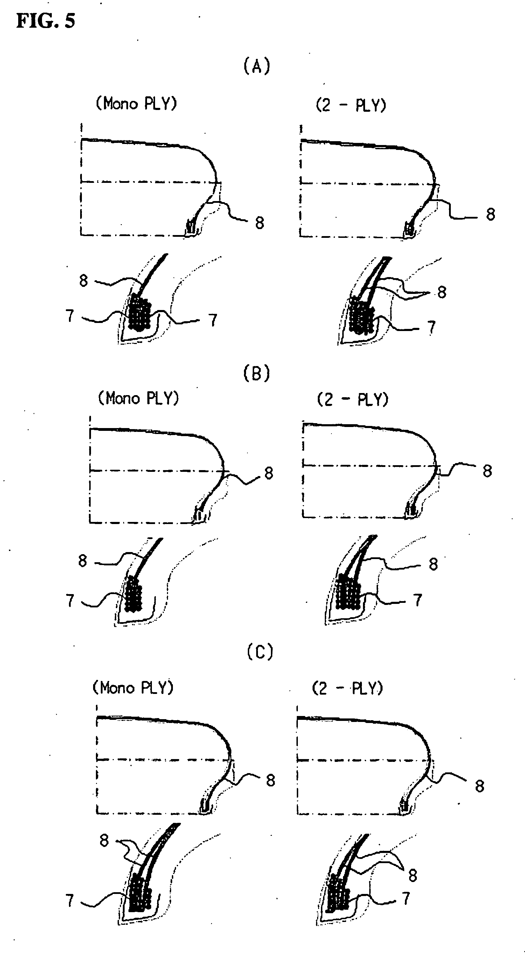

FIGS. 5 (A) through (C) schematically illustrate the various applications of the bead structure 7 manufactured by the invention to the tire having a mono-ply or two-ply carcass, respectively.

In accordance with the present invention, since the bead structure can be attached onto the carcass while maintaining a uniform pressing force thereon, there remains no deformation in the partly manufactured products, which allows manufacturing the green tire having a uniform or homogeneous quality.

While the invention has been shown and described with reference to a preferred embodiment, it should be apparent to those skilled in the art that many changes and modifications may be made without departing from the scope of the invention as defined in the claims.

## Claims

1. A bead structure building apparatus in a green tire building machine comprising
a bead wire supply means (2) for introducing a bead wire (1) toward a tire building drum (3);
a pair of laterally spaced bead wire winding means (4a, 4b) disposed at opposite sides of a tire building drum (3) for winding the bead wire (1) thereon;
a first moving means (5) operatively engaged with the bead wire supply means (2) for transporting the bead wire supply means (2) to a respective position facing each bead wire winding means (4a, 4b);
a second moving means (6) operatively connected with the respective bead wire winding means (4a, 4b) for transporting each bead wire winding means (4a, 4b) between a first and a second position, respectively; and **characterized in that** it further comprises
a bead structure attaching means (6A) operatively engaged at the circumferential end of the first and second bead wire winding means (4a, 4b) for attaching the bead structure (7) formed by the wounded bead wire (1) onto the carcass (8) disposed on the tire building drum (3), wherein the bead structure attaching means (6A) comprises a bead winding plate (16) pivotally attached to the first and second bead wire winding means (4a, 4b) through a hinge pin (18) and an actuator fixedly mounted to the upper end of the first and second bead wire winding means (4a, 4b), whereby pivoting of the bead winding plate allows the bead structure (7) to be attached to the carcass (8) disposed on the tire building drum (3).

2. The bead structure building apparatus according claim 1, wherein the actuator includes an air cylinder (19).

3. The bead structure building apparatus according to claim 1 or 2, wherein the bead winding plate (16) has an insert groove (17) the size of which is dimensioned to be about a half of the diameter of the bead wire (1).

4. The bead structure building apparatus according to any one of claims 1 to 3, wherein the bead wire supply means (2) comprises a guide wheel (9) freely rotatable on its axis through which the bead wire (1) is introduced to an applicator (10), a gripper (11) operatively secured at one side of the applicator (10) for holding the bead wire (1), a hydraulic actuator for moving the applicator (10) within a predetermined distance, and a cutter (12) for cutting the bead wire (1) when the bead wire building operation is finished.

5. The bead structure building apparatus according to claim 4, wherein the hydraulic actuator includes an air cylinder (20).

6. The bead structure building apparatus according to any one of claims I to 5, wherein the first moving means (5) comprises a guide rail (13) on which the bead wire supply means (2) is operatively secured and an actuator for moving the bead wire supply means (2) on the guide rail (13) so that the bead wire supply means (2) is allowed to move slidably between two positions, each position corresponding substantially to a position that faces each bead wire winding means (4a, 4b).

7. The bead structure building apparatus according to any one of claims 1 to 6, wherein the second moving means (6) comprises a driving motor (14) disposed under the tire building drum (3) for producing a rotary force and a linear guide (15) operatively connected to the motor (14) to produce a linear displacement from the revolving movement of the motor (14) so that the first and second bead wire winding means (4a, 4b) rigidly affixed on the linear guide (15) is able to reciprocally move between a first position and a second position.

8. The bead structure building apparatus according to claim 7, wherein the second position is predetermined depending upon the specification of the tire, wherein the movement of the first and second bead wire winding means (4a, 4b) to the second position can be regulated by the operation of the motor (14).

## Patentansprüche

1. Wulststruktur-Aufbauvorrichtung in einer Reifenrohling-Aufbaumaschine, umfassend
ein Wulstdraht-Zuführmittel (2) zum Zuführen eines Wulstdrahtes (1) zu einer Reifenaufbautrommel (3),
ein Paar von seitlich beabstandeten Wulstdraht-Wicklungsmitteln (4a, 4b), die an gegenüberliegenden Seiten einer Reifenaufbautrommel (3) angeordnet sind, um den Wulstdraht (1) darauf zu wickeln,
ein erstes Bewegungsmittel (5), das wirkend mit dem Wulstdraht-Zuführmittel (2) in Eingriff steht, um das Wulstdraht-Zuführmittel (2) in eine entsprechende jedem Wulstdraht-Wicklungsmittel (4a, 4b) zugewandte Position zu transportieren,
ein zweites Bewegungsmittel (6), das wirkend mit dem entsprechenden Wulstdraht-Wicklungsmittel (4a, 4b) verbunden ist, um jedes Wulstdraht-Wicklungsmittel (4a, 4b) zwischen jeweils einer ersten und einer zweiten Position zu bewegen,
**dadurch gekennzeichnet, daß** sie ferner umfaßt
ein Wulstdraht-Befestigungsmittel (6a), das wirkend am äußeren Umfang der ersten und zweiten Wulstdraht-Wicklungsmittel (4a, 4b) zum Befestigen der von dem gewickelten Wulstdraht (1) gebildeten Wulststruktur (7) auf der auf der Reifenaufbautrommel (3) angeordneten Karkasse (8) angreift, wobei das Wulststruktur-Befestigungsmittel (6A) eine Wulst-Wicklungsplatte (16), die über einen Gelenkbolzen (18) schwenkbar an dem ersten und dem zweiten Wulstdraht-Wicklungsmittel (4a, 4b) befestigt ist, und einen Aktuator umfaßt, der fest an dem oberen Ende des ersten und des zweiten Wulstdraht-Wicklungsmittels (4a, 4b) befestigt ist, wobei das Schwenken der Wulstdraht-Wicklungsplatte es der Wulststruktur (7) erlaubt, an der Reifenaufbautrommel (3) angeordneten Karkasse (8) befestigt zu werden.

2. Wulststruktur-Aufbauvorrichtung nach Anspruch 1, wobei der Aktuator einen Luftzylinder umfaßt (19).

3. Wulststruktur-Aufbauvorrichtung nach Anspruch 1 oder 2, wobei die Wulst-Wicklungsplatte (16) einen Nuteneinsatz (17) aufweist, dessen Größe so dimensioniert ist, dass sie ungefähr die Hälfte des Durchmessers des Wulstdrahtes (1) beträgt.

4. Wulststruktur-Aufbauvorrichtung nach einem der Ansprüche 1 bis 3, wobei das Wulstdraht-Zuführmittel (2) ein frei um seine Achse drehbares Führungsrad (9), durch welches der Wulstdraht (1) einem Applikator (10) zugeführt wird, einen an einer Seite des Applikators (10) befestigten Greifer (11) zum Halten des Wulstdrahtes (1), einen hydraulischen Aktuator zum Bewegen des Applikators (10) innerhalb einer vorbestimmten Reichweite und einen Schneider (12) zum Schneiden des Wulstdrahtes (1), wenn der Wulstdraht-Erzeugungsvorgang abgeschlossen ist, umfaßt.

5. Wulststruktur-Aufbauvorrichtung nach Anspruch 4, wobei der hydraulische Aktuator einen Luftzylinder (20) beinhaltet.

6. Wulststruktur-Aufbauvorrichtung nach einem der Ansprüche 1 bis 5, wobei das erste Bewegungsmittel (5) eine Führungsschiene (13), auf welcher das Wulstdraht-Zuführmittel (2) befestigt ist, und einen Aktuator zum Bewegen des Wulstdraht-Zuführmittels (2) auf der Führungsschiene (13) umfaßt, so daß es dem Wulstdraht-Zuführmitttel (2) ermöglicht wird, sich gleitend zwischen zwei Positionen zu bewegen, wobei jede Position im wesentlichen einer Position entspricht, die jedem Wulstdraht-Wicklungsmittel (4a, 4b) zugewandt ist.

7. Wulststruktur-Aufbauvorrichtung nach einem der Ansprüche 1 bis 6, wobei das zweite Bewegungsmittel (6) einen unter der Reifenaufbautrommel (3) angeordneten Antriebsmotor (14) zum Erzeugen einer Drehkraft, und eine mit dem Motor (14) wirkend verbundene Linearführung (15) umfaßt, um eine lineare Verschiebung aus der Drehbewegung des Motors (14) zu erzeugen, so daß das fest an der linearen Führung (15) befestigte erste und zweite Wulstdraht-Wicklungsmittel (4a, 4b) in der Lage ist, sich umgekehrt zwischen einer ersten Position und einer zweiten Position zu bewegen.

8. Wulststruktur-Aufbauvorrichtung nach Anspruch 7, wobei die zweite Position abhängig von der Spezifikation des Reifens vorbestimmt ist, wobei die Bewegung der ersten und zweiten Wulstdraht-Wicklungsmittel (4a, 4b) zu der zweiten Position durch den Betrieb des Motors (14) gesteuert werden kann.

## Revendications

1. Appareil de fabrication de structure de talon dans une machine de fabrication de pneus crus, comprenant :
des moyens d'alimentation de tringle de talon (2) pour introduire une tringle de talon (1) vers un tambour de fabrication de pneus (3) ;
une paire de moyens d'enroulement de tringle de talon latéralement espacés (4a, 4b) disposés sur les côtés opposés d'un tambour de fabrication de pneus (3) pour enrouler la tringle de talon (1) sur ce dernier ;
des premiers moyens de déplacement (5) opérationnellement mis en prise avec les moyens d'alimentation de tringle de talon (2) afin de transporter les moyens d'alimentation de tringle de talon (2) dans une position respective faisant face à chaque moyen d'enroulement de tringle de talon (4a, 4b) ;
des deuxièmes moyens de déplacement (6) opérationnellement raccordés avec les moyens d'enroulement de tringle de talon (4a, 4b) respectifs afin de transporter chaque moyen d'enroulement de tringle de talon (4a, 4b) entre une première et une deuxième position ; et **caractérisé en ce qu'**il comprend en outre :
des moyens de fixation de structure de talon (6A) mis en prise de manière opérationnelle au niveau de l'extrémité circonférentielle des premiers et deuxièmes moyens d'enroulement de tringle de talon (4a, 4b) pour fixer la structure de talon (7) formée par la tringle de talon enroulée (1) sur la carcasse (8) disposée sur le tambour de fabrication de pneus (3), dans lequel les moyens de fixation de structure de talon (6A) comprennent une plaque d'enroulement de talon (16) fixée de manière pivotante aux premiers et deuxièmes moyens d'enroulement de tringle de talon (4a, 4b) par le biais d'un axe de charnière (18) et un actionneur monté de manière fixe sur l'extrémité supérieure des premiers et deuxièmes moyens d'enroulement de tringle de talon (4a, 4b), moyennant quoi le pivotement de la plaque d'enroulement de talon permet à la structure de talon (7) d'être fixée à la carcasse (8) disposée sur le tambour de fabrication de pneus (3).

2. Appareil de fabrication de structure de talon selon la revendication 1, dans lequel l'actionneur comprend un vérin pneumatique (19).

3. Appareil de fabrication de structure de talon selon la revendication 1 ou 2, dans lequel la plaque d'enroulement de talon (16) a une rainure d'insertion (17) dont la taille est dimensionnée pour représenter environ la moitié du diamètre de la tringle de talon (1).

4. Appareil de fabrication de structure de talon selon l'une quelconque des revendications 1 à 3, dans lequel les moyens d'alimentation de tringle de talon (2) comprennent une roue de guidage (9) pouvant tourner librement sur son axe à travers laquelle la tringle de talon (1) est introduite sur un applicateur (10), un dispositif de préhension (11) fixé de manière opérationnelle au niveau d'un côté de l'applicateur (10) pour maintenir la tringle de talon (1), un actionneur hydraulique pour déplacer l'applicateur (10) dans les limites d'une distance prédéterminée, et un dispositif de coupe (12) pour couper la tringle de talon (1) lorsque l'opération de fabrication de tringle de talon est terminée.

5. Appareil de fabrication de structure de talon selon la revendication 4, dans lequel l'actionneur hydraulique comprend un vérin pneumatique (20).

6. Appareil de fabrication de structure de talon selon l'une quelconque des revendications 1 à 5, dans lequel les premiers moyens de déplacement (5) comprennent un rail de guidage (13) sur lequel les moyens d'alimentation de tringle de talon (2) sont fixés de manière opérationnelle et un actionneur pour déplacer les moyens d'alimentation de tringle de talon (2) sur le rail de guidage (13) de sorte que les moyens d'alimentation de tringle de talon (2) sont autorisés à se déplacer de manière coulissante entre deux positions, chaque position correspondant sensiblement à une position qui fait face à chaque moyen d'enroulement de tringle de talon (4a, 4b).

7. Appareil de fabrication de structure de talon selon l'une quelconque des revendications 1 à 6, dans lequel les deuxièmes moyens de déplacement (6) comprennent un moteur d'entraînement (14) disposé sous le tambour de fabrication de pneus (3) pour produire une force de rotation et un guide linéaire (15) raccordé de manière opérationnelle au moteur (14) afin de produire un déplacement linéaire du mouvement de rotation du moteur (14) de sorte que les premiers et deuxièmes moyens d'enroulement de tringle de talon (4a, 4b) rigidement fixés sur le guide linéaire (15) peuvent se déplacer selon un mouvement de va-et-vient entre une première position et une deuxième position.

8. Appareil de fabrication de structure de talon selon la revendication 7, dans lequel la deuxième position est prédéterminée en fonction de la spécification du pneu, dans lequel le mouvement des premiers et deuxièmes moyens d'enroulement de tringle de talon (4a, 4b) dans la deuxième position peut être régulé par le fonctionnement du moteur (14).
